# EUROPÄISCHE PATENTANMELDUNG

(11) **EP 1 151 907 A1**
(43) Veröffentlichungstag der Anmeldung: **07.11.2001**
(21) Anmeldenummer: 00810377.2
(22) Anmeldetag: 03.05.2000
(51) Int. Cl.: B62B 3/00

(54) **Transportwagen**

(71) Anmelder: Diethelm & Co. AG - Wetrok, 8052 Zürich (CH)
(72) Erfinder: Frost, Paul, Taunton,Somerset TA2 8TA (GB); Hudsmith, David, Wookey Hole, Somerset (GB); Ellams, Mike, Porthcawl, Wales CF36 3DD (GB)
(74) Vertreter: Patentanwälte Feldmann & Partner AG

(57) **Zusammenfassung**

Ein Transportwagen, insbesondere als Wagen zum Transport von Reinigungsutensilien weist eine Grundplatte auf Rädern oder Rollen auf. Auf der Grundplatte steht eine zentrale Säule. An der zentralen Säule sind in verschiedener Höhe Tablare angeordnet. Dabei sind die Tablare einer Höhe gegenüber den Tablaren der anderen Höhe um die zentrale Säule drehbar. Ein guter Zugriff zu den Untensilien auf den verschiedenen Tablaren ist somit jederzeit gewährleistet.

## Beschreibung

Die Erfindung betrifft einen Transportwagen nach dem Oberbegriff des unabhängigen Patentanspruches.

Auf dem Markt sind vielerlei Transportwagen zum Transportieren von Reinigungsutensilien erhältlich. Sie dienen dazu, dass das Reinigungspersonal während seinen Touren die notwendigen Utensilien wie Behälter, Reinigungswasser, Chemikalien, Tücher, Abfallbehälter und dergleichen mitnehmen kann. Diese Wagen weisen alle eine Grundplatte als Chassis auf, welche mit vier Rollen versehen ist. Zwei beabstandete U-förmige Stossbügel zum Ziehen oder Stossen des Transportwagens ragen von der Grundplatte nach oben und bilden einen Handgriff. Verschiedene Tablare oder Ladeflächen können in unterschiedlicher Höhe zwischen den Stossbügeln angeordnet und an diesen befestigt sein. Die Stossbügel bilden somit auch die Träger für die Tablare. Sie befinden sich im Abstand über der Grundplatte. Die Grundplatte selbst dient auch bereits als Ladefläche. Weitere Elemente können bei einigen Transportwagen an den Stossbügeln nach aussen ragend angehängt werden. Ein Beispiel dafür ist eine Halterung für einen Abfallsack. Neuerdings sind Transportwagen auf den Markt gekommen, bei denen zwei Tragstangen mit rechteckigem Querschnitt für die Tablare von den Stossbügeln getrennt, separat an der Grundplatte angeordnet sind. Dadurch ergibt sich die Möglichkeit, die Tablare an nur zwei voneinander beabstandeten Tragstangen zu befestigen. Damit wird die Zugänglichkeit zu den Ladeflächen oder Tablaren entscheidend verbessert. Man kann nun annähernd von allen Seiten auf die Ladeflächen zugreifen um die gewünschten Utensilien in die Hand zu nehmen oder wieder zu versorgen. Auch diese neuesten Ausführungen von Transportwagen haben immer noch den Nachteil, dass nur die oberste Ladefläche wirklich frei zugänglich ist.

Aufgabe der Erfindung ist es, ein Transportwagen zu schaffen, welcher diese Nachteile nicht mehr aufweist.

Diese Aufgabe wird durch die in den Patentansprüchen angegebene Erfindung gelöst.

Der erfindungsgemässe Transportwagen wird nachstehend im Zusammenhang mit den Zeichnungen beschrieben. Es zeigen:

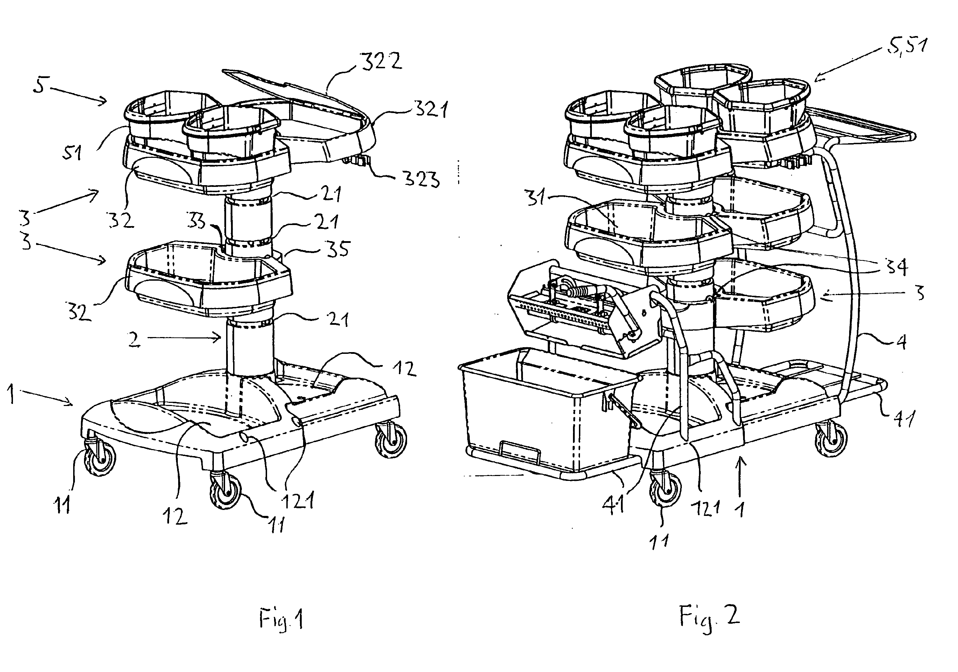

- Figur 1: eine Ansicht des Transportwagens mit wenigen Tablaren;
- Figur 2: eine Ansicht des Transportwagens mit mehreren Tablaren;
- Figur 3: Aufsicht auf ein Tablar mit zugehörendem spezielle Eimer;
und
- Figur 4: ein spezieller Eimer in Ansicht.

Der erfindungsgemässe Transportwagen ist auf einer Grund- oder Chassis-Platte 1 aufgebaut. Er weist an seiner Unterseite drei oder vier Räder oder Rollen 11 auf. Ein Teil der Rollen 11 ist drehbar um eine vertikale Befestigung angebracht. Annähernd im Mittelpunkt der Grundfläche der Grundplatte 1 ist eine zentrale Säule 2 nach oben aufragend angeordnet. Die Chassisplatte 1 ist als Ladefläche gestaltet und kann mit einem Rahmen umrandet sein. Im Weiteren sind Montageaufnahmen für Stossbügel 4 oder Montagebügel 41 für Anhängegeräte oder Anhängeelmente bekannter Art vorgesehen.

Die zentrale Säule 2 weist erste Aufnahmestellen 21 für die Befestigung von mindestens einem Tablar 3 auf. Die zentrale Säule hat in der bevorzugten Ausführungsform einen runden Querschnitt und ist einstückig. Dabei sind die ersten Aufnahmestellen 21 entweder als rundumlaufende Nuten in die zentrale Säule 2 eingeformt oder sie sind als umlaufende Rippe an ihr angeformt. Vorteilhafterweise sind mehrere solche Aufnahmestellen 21 im Abstand übereinander angeordnet. An jeder dieser Aufnahmestelle 21 können ein oder zwei Tablare 3 befestigt werden. Jedes Tablar 3 weist einen Rahmen 32 auf, welcher im Bereich zur zentralen Säule 2 ein erstes Lagerschalenelement 33 bildet. Das erste Lagerschalenelement 33 umfasst die zentrale Säule höchstens auf halbem Umfang. An, resp. im ersten Lagerschalenelement 33 ist eine Rippe oder eben eine Nut vorhanden, welche formschlüssig im entsprechenden Gegenstück an der zentralen Säule gehalten ist.

An einer Aufnahmestelle 21 werden von gegenüberliegenden Seiten je ein Tablar 3 angeordnet. Die ersten Lagerschalenelemente 33 beider Tablare 3 werden im Bereich, wo sie annhähernd aneinander stossen, mit einem Kopplungselement 34 miteinander verbunden. Das Kopplungselment 34 kann eine einfach U-förmig gebogene Klammer sein, welche von oben durch je eine Oeffnung in den ersten Lagerschalenelementen 33 eingesteckt wird. Durch diese Kopplungselemente 34 werden somit die beiden einander gegenüberliegenden Tablare 3 gegeneinander gesichert. Sie sind somit formschlüssig in der gleichen Aufnahmestelle 21 gehalten und können nicht nach unten fallen oder nach oben abgehoben oder seitlich weggezogen werden. Dadurch wird aber auch ermöglicht, dass die beiden Tablare 3 miteinander um die zentrale Säule gedreht werden können. Die ersten Lagerschalenelemente 33 bilden so ein in axialer Richtung an der zentralen Säule geführtes drehbares Gleitlager. An Stelle eines zweiten Tablares 3 kann auch ein einfaches zweites Lagerschalenelement 35 ohne Tablar 3 verwendet werden, welches zusammen mit einem einseitig angeordneten Tablar 3 gekoppelt die gleiche Funktion erfüllt.

Auf diese Weise werden nun auch mehrere Tablare 3 übereinander in verschiedener Höhe an beabstandeten Aufnahmestellen 21 angebracht. Es können also auch ein Tablar 3 einseitig und auf einer anderen Höhe zwei gegenüberliegende Tablare 3 an der zentralen Säule vorhanden sein. Für die Benützung eines unteren Tablares 3 wird dieses nun einfach um 90° gegenüber der zentralen Säule 2 und somit gegenüber den oberen Tablaren gedreht. Der grosse Vorteil ist gut ersichtlich, denn man kann nun mehrere Tablare 3 gleichzeitig benützen, da sie frei zugänglich sind.

Die Tablare 3 weisen üblicherweise einen Rahmen auf, welcher einen Tablarboden umfängt. Sie bilden so eine Art von Einlegemulde zum Einlegen von Utensilien wie Wischern, Schwämmen, Tüchern, Reinigungspapieren und so weiter. So ein Tablar kann aber auch ohne Boden als reiner Einhängerahmen 321 ausgeführt sein und nur aus dem Rahmen bestehen. Es ist somit als Sackhalter, beispielsweise zum Einhängen von Abfallsäcken, benützbar. Dazu kann der Einhängerahmen 321 mit einem Klemmbügel 322 zum Festklemmen eines Sackes ergänzt sein. Weitere Möglichkeiten ergeben sich durch Anordnen von besonderen Hacken oder Klemmen 323 aussen an der Tablaren.

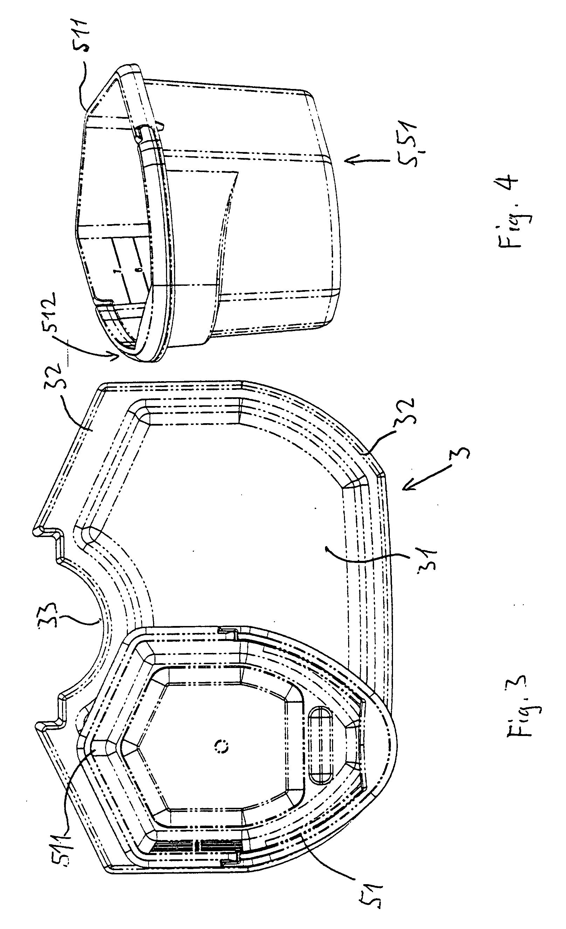

Die Tablare 3, aus Figur 3 gut ersichtlich, werden vorteilhafterweise mit einem Rahmen 32 ausgestaltet, welcher durch seine Formgebung geeignet ist, gewisse Einstellelemente 5 mindestens teilweise formschlüssig darin aufzunehmen. Als Beispiel seien die dargestellten Eimer 51 genannt. Diese Eimer 51 weisen eine Form auf, welche der Form der Innenseite des Rahmens 32 entspricht. Dabei kann dieser Formschluss ein einzelnes Einstellelement 5 betreffen oder eben auch zwei zusammen. Dargestellt sind zwei Eimer 51, welche im, in das Tablar eingestellten Zustand, einander teilweise berühren und auf den übrigen Seiten mit dem Rahmen 32 in Berührung stehen. Sie sind somit durch die genannten beiden Berührungen formschlüssig im Tablar resp. in der Tablarmulde 31 gehalten. Die Eimer können eine Formkantekante 511 aufweisen, welche vom Rahmen 32 im Bereich des Ueberganges zum ersten Lagerschalenelement 33 formschlüssig gehalten ist. Eine Ausgusskante 512 ermöglich dann auch ein Ausgiessen von Reinigungsflüssigkeit ohne Anzug der Flüssigkeit und ohne zu tropfen. Auch diese kann zum Formschluss beitragen.

Die zentrale Säule kann in einer anderen Ausführungsform statt einstückig aus mehreren einzelnen Säulenelementen bestehen. Diese werden dann ineinander gesteckt und bilden so zusammen eine turmartige Säule. Die Aufnahmestellen 21 befinden sich immer am Uebergang von einem Säulenelement zum nächsten. Mit dieser Ausführungsform kann die zentrale Säule verlängert werden. Der Transportwagen ist somit erweiterbar, wenn zusätzliche Tablare 3 benötigt werden.

Bei einer weiteren Ausführungsform mit einer aus einzelnen Säulenelementen aufgebauter zentralen Säule werden diese Säulenelemente gegeneinander drehbar ausgeführt. Dies ermöglicht, die Tablare 3 an jeweils einem Säulenelement fest anzuordnen. Das bedeutet, dass ein Säulenelement und ein, respektive zwei einander gegenüberliegende Tablare 3 sogar einstückig ausgeführt sein können. Die Funktion des Ausdrehens eines unteren oder oberen Tablares ist dann dadurch gewährleistet, dass das oder die beiden Tablare zusammen mit dem Säulenelement gegenüber den oberen und/oder unteren gedreht werden können. Ein weiterer Vorteil dieser Ausführung ist, dass kein Lagerschalenelement nötig ist und die zentrale Säule auch keinen runden Querschnitt aufweisen muss. Sie kann beispielsweise einen quadratischen Querschnitt aufweisen oder mit dem Tablar zusammen in bezug auf den Verlauf der Belastungskräfte optimiert werden.

Ein entscheidender Vorteil des erfindungsgemässen Transportwagens besteht darin, dass er grösstenteils aus geformten Kunststoffteilen hergestellt sein kann. Er hat somit ein kleines Eigengewicht und ist selbst gut zu reinigen.

## Patentansprüche

1. Transportwagen für Reinigungs- oder Werkstattutensilien mit einer Grundplatte und mindestens drei daran angeordneten Rädern und mit im Abstand über der Grundplatte befestigten Tablaren
**dadurch gekennzeichnet, dass**
eine zentrale Säule annähernd im Zentrum der Grundplatte auf der den Rädern gegenüberliegenden Seite nach oben ragend angeordnet ist und dass mindestens ein Tablar an der zentralen Säule um diese drehbar angebracht ist.

2. Transportwagen nach Anspruch 1, **dadurch gekennzeichnet, dass** die zentrale Säule aus mehreren übereinander angebrachten und miteinander verbundenen einzelnen Säulenelementen mit rundem oder polygonem Querschnitt besteht, welche gegeneinander verdrehbar sind.

3. Transportwagen nach Anspruch 2, **dadurch gekennzeichnet, dass** jedes Tablar mit einem Säulenelement verbunden ist.

4. Transportwagen nach Anspruch 3, **dadurch gekennzeichnet, dass** das Tablar und das zugehörende Säulenelement einstückig sind.

5. Transportwagen nach Anspruch 1, **dadurch gekennzeichnet, dass** die zentrale Säule erste Aufnahmestellen für eine formschlüssige Aufnahme der Tablare aufweist und dass die Tablare zweite Aufnahmestellen für die Verbindung mit der zentralen Säule aufweisen.

6. Transportwagen nach Anspruch 2, **dadurch gekennzeichnet, dass** die zentrale Säule einstückig ist und einen runden Querschnitt aufweist und dass das Tablar drehbar daran angebracht ist.

7. Transportwagen nach Anspruch 2, **dadurch gekennzeichnet, dass** die zentrale Säule einen runden Querschnitt aufweist und jedes Tablar einseitig an der zentralen Säule angebracht ist und ein erstes Lagerschalenelement aufweist, welches die zentrale Säule höchstens auf dem halben Umfange umfasst.

8. Transportwagen nach Anspruch 7, **dadurch gekennzeichnet, dass** je zwei Tablare gegenseitig an der zentralen Säule angebracht sind und zusammen die zentrale Säule annähernd vollständig umfassen und dass ihre ersten Lagerschalenelemente mittels zwei Kopplungsteilen verbunden sind.

9. Transportwagen nach Anspruch 7, **dadurch gekennzeichnet, dass** das erste Lagerschalenelement mit einem zweiten Lagerschalenelement zusammen die zentrale Säule annähernd vollständig umfassen und dass das erste Lagerschalenelment und das zweite Lagerschalenelement mitttels zwei Kopplungsteilen verbunden sind.

10. Transportwagen nach Anspruch 1, **dadurch gekennzeichnet, dass** das Tablar eine Mulde mit einem Boden zur Aufnahme von Utensilien und einen, die Mulde umfangenden erhabenen Rahmen umfasst und dass der Rahmen im Bereich der zentralen Säule das erste Lagerschalenelement bildet.

11. Transportwagen nach Anspruch 1, **dadurch gekennzeichnet, dass** das Tablar ein Einhängerahmen umfasst, welcher im Bereich der zentralen Säule das erste Lagerschalenelement bildet, und bodenlos ausgeführt ist.

12. Transportwagen nach Anspruch 10, **dadurch gekennzeichnet, dass** der die Mulde umfangende Rahmen eine oder zwei herausnehmbare Einstellelemente mindestens teilweise formschlüssig umfängt.

13. Transportwagen nach Anspruch 12, **dadurch gekennzeichnet, dass** die herausnehmbaren Einstellelemente Eimer sind.

14. Transportwagen nach Anspruch 13, **dadurch gekennzeichnet, dass** die Eimer eine Ausgusskante aufweisen, welche vom erhabenen Rahmen im Bereich des Ueberganges zum ersten Lagerschalenelement formschlüssig gehalten ist.
